# EUROPÄISCHE PATENTANMELDUNG

(11) **EP 1 621 401 A1**
(43) Veröffentlichungstag der Anmeldung: **01.02.2006**
(21) Anmeldenummer: 05015054.9
(22) Anmeldetag: 12.07.2005
(51) Int. Cl.: B60Q 1/30, B60R 16/02, B60Q 1/26, B60Q 1/32

(54) **Anhänger-Beleuchtungsanordnung für eine Zugfahrzeug-Anhänger-Kombination**

(30) Priorität: 27.07.2004 DE 102004036342
(71) Anmelder: Schmitz Gotha Fahrzeugwerke GmbH, 99867 Gotha (DE)
(72) Erfinder: Koch, Joseph, 89081 Ulm (DE)
(74) Vertreter: Weber, Gerhard

(57) **Zusammenfassung**

Für eine Beleuchtungsanordnung einer Zugfahrzeug-Anhänger-Kombination (Z,A) werden Maßnahmen vorgeschlagen, welche die Ausfallwahrscheinlichkeit von Teilen der anhängerseitigen Beleuchtungsanordnung (GL,GR,BAL,BAR,FAR) reduzieren und damit die Verkehrssicherheit erhöhen. Die Maßnahmen erfolgen ausschließlich auf Anhängerseite (A) und sind kompatibel mit standardisierten gängigen Systemen auf Zugfahrzeugseite (Z). Insbesondere ist anhängerseitig eine Sicherungsanordnung (SI1) vorgesehen.

## Beschreibung

Die Erfindung betrifft eine Anhänger-Beleuchtungsanordnung für eine Zugfahrzeug-Anhänger-Kombination.

Bei Zugfahrzeug-Anhänger-Kombinationen werden typischerweise die anhängerseitigen Verbraucher einer Beleuchtungsanordnung über eine mehrpolige Steckerverbindung aus dem Bordnetz des Zugfahrzeugs versorgt. Dabei sind verschiedene Leuchtenstromkreise des Anhängers entsprechend unterschiedlichen Beleuchtungsfunktionen getrennten Polen der Steckerverbindung bzw. getrennten Adern eines Steckerkabels zugeordnet und einzeln im Zugfahrzeug abgesichert. Es ist ferner bekannt, zusätzlich auf Anhängerseite in einer bei der Steckerverbindung frontseitig angeordneten Steuereinrichtung die einzelnen anhängerseitigen Stromkreise nochmals mit separaten Schmelzsicherungen abzusichern.

Aus der DE 102 47 307 B3 ist ein Fahrzeugbordnetz mit einer Sicherungsanordnung bekannt, bei welcher höhere Ströme durch Parallelbetrieb von wenigstens zwei Sicherungen an einem Verbraucherstromkreis abgesichert werden können. Neben den bevorzugten Schmelzsicherungen sind auch PTC-Sicherungselemente für den Kfz-Einsatz, z B. aus der DE 202 19 088 U1 an sich bekannt, aber nicht üblich.

Die verschiedenen Beleuchtungsfunktionen können insbesondere gegeben sein durch Blinker links, Blinker rechts, Bremslichter, Rückfahrscheinwerfer, Nebelschlussleuchte und/oder die Gruppe mit Rücklichtern, Umriss-, Markierungs-, Spurhalte- und Kennzeichenleuchten, wobei die Lichter der letztgenannten Gruppe immer gemeinsam betrieben sind und typischerweise in Teilgruppen links und rechts über getrennte Adern und Steckerpole versorgt sind und im Zugfahrzeug jeweils separat abgesichert sind. Die Leuchten der anderen Beleuchtungsfunktionen sind typischerweise zusammen mit den funktionsgleichen Leuchten des Zugfahrzeugs abgesichert.

Die Beleuchtungsanordnung unterliegt in den rauhen Bedingungen der Einsatzumgebung einer Vielzahl von Störeinflüssen, welche auch die Absicherung der einzelnen Stromkreise gegen Überströme beeinflussen, wobei unter Sicherheitsaspekten einerseits Beleuchtungsausfälle durch Störungen möglichst gering gehalten werden und andererseits Störungen möglichst zuverlässig und frühzeitig erkannt werden sollen.

Der vorliegenden Erfindung liegt die Aufgabe zugrunde, ohne Einbußen bei der elektrischen Sicherheit Beleuchtungsausfälle anhängerseitiger Verbraucher zu verringern und hierbei insbesondere ohne Eingriffe in die elektrischen Systeme der u. U. häufig wechselnden Zugfahrzeuge auszukommen und die Kompatibilität mit bestehenden standardisierten Zugfahrzeug-Versorgungssystemen für die Anhänger-Beleuchtungsanordnung zu wahren.

Die Erfindung ist im Patentanspruch 1 beschrieben. Die abhängigen Ansprüche enthalten vorteilhafte Ausgestaltungen und Weiterbildungen der Erfindung.

Die erfindungsgemäßen Maßnahmen sind bevorzugt gemeinsam realisiert. Die Erfindung ist besonders vorteilhaft in Verbindung mit Leuchtenanordnungen, welche mit lichtemittierenden Dioden, insbesondere in Reihenschaltung mehrerer Dioden, ausgestattet sind.

Die Zusammenführung von in standardisierten elektrischen Zugfahrzeug-Versorgungssystemen für Anhänger-Beleuchtungsanordnungen getrennten Versorgungsleitungen für linksseitige und rechtsseitige Teilgruppen von Leuchten aus der Gruppe mit Rücklichtern, Umrissleuchten, seitlichen Markierungsleuchten, Spurhalteleuchten und Kennzeichenleuchten auf ein gemeinsames Zwischenpotential auf Anhängerseite verringert die Auswirkungen von zugfahrzeugseitigen Störungen, welche zum Auslösen einer der beiden für die Teilgruppen parallel vorgesehenen Sicherungen führen oder Schäden in einer der beiden parallelen Adern bewirken, auf die anhängerseitige Beleuchtungsanordnung, da der Strom für beide Teilgruppen problemlos auch von nur einem der beiden parallelen zugfahrzeugseitigen Leitungswege getragen werden kann. Besonders vorteilhaft ist hierbei die Verwendung von Leuchtdioden als Leuchtmittel in den angeschlossenen anhängerseitigen Leuchten, da hierdurch der Betriebsstrom deutlich abgesenkt werden kann. Zur Vermeidung von Rückwirkungen eines intakten zugfahrzeugseitigen Leitungswegs auf den durch Auslösen der zugeordneten Sicherung unterbrochenen parallelen Leitungsweg über die Potentialzusammenführung sind anhängerseitig zwischen der Steckerverbindung und der Potentialzusammenführung Rückstromsperren, vorteilhafterweise Halbleiterdioden eingefügt.

Besonders vorteilhaft ist der Einsatz von selbstrückstellenden Überstrom-Sicherungselementen in einer anhängerseitigen ersten Sicherungsanordnung zur Überstromsicherung von Stromkreisen der anhängerseitigen Beleuchtungsanordnung, wobei die Ansprechstromquelle dieser selbstrückstellenden Überstrom-Sicherungselemente vorteilhafterweise deutlich unter der Ansprechstromschwelle der zum selben Stromkreis gehörenden Sicherung in der zugfahrzeugseitigen zweiten Sicherungsanordnung liegt. Hierdurch kann die anhängerseitige Sicherung schneller und besser angepasst auf anhängerseitige Störungen reagieren, wodurch die elektrische Sicherheit verbessert wird. Insbesondere aber kann nach Wegfall einer das Ansprechen des Sicherungselements verursachenden Störung das Sicherungselement wieder selbsttätig in den niederohmigen Zustand zurückfallen und somit die Ausfallzeit der betroffenen Beleuchtungsfunktion im wesentlichen auf die Zeit des Vorliegens des störungsbedingten Überstroms bzw. Kurzschlusses beschränkt werden.

In einer ersten vorteilhaften Ausführungsform sind die selbstrückstellenden Überstrom-Sicherungselemente als strombegrenzende Bauteile bzw. Schaltungen ausgeführt. Der Grenzstrom kann dabei vorteilhafterweise auf maximal das 3-fache, insbesondere maximal das 2-fache des Nennstroms des angeschlossenen Leuchten-Stromkreises eingestellt sein. Bei Ansprechen des Sicherungselements fließt nur der Grenzstrom.

In anderer vorteilhafter Ausführungsform sind als Überstrom-Sicherungselemente PTC-, insbesondere Polymer-PTC-Sicherungen eingesetzt, welche bei einem Strom über der Ansprechschwelle durch Erwärmung in einen hochohmigen Zustand springen und nach Abkühlung wieder niederohmig werden. Von besonderem Vorteil ist hierbei wiederum die Verwendung von Leuchtdioden, vorzugsweise Reihenschaltungen von Leuchtdioden als Leuchtmittel in den angeschlossenen Leuchtenanordnungen, da dann beim Abkühlen des durch den Überstrom erhitzten hochohmigen Sicherungselements der bei Sinken der Temperatur und des Widerstands des Sicherungselements wieder einsetzende Strom bereits bei niedrigen Stromwerten einen großen Spannungsabfall in den Dioden hervorruft und nur wenig Spannung am Sicherungselement abfällt, so dass dieses zuverlässig und schnell weiter abkühlen kann.

Das Ansprechen des Sicherungselements kann in vorteilhafter Ausführung ein Störsignal auslösen, welches z. B. bei der ersten Sicherungsanordnung eine optische Anzeige, insbesondere eine Leuchtdiode ansteuern und damit für den Benutzer leicht erkennbar das Vorliegen einer Störung signalisieren kann. Ein Störsignal kann z B. einfach aus einem erhöhten Spannungsabfall am Sicherungselement abgeleitet werden. Vorteilhafterweise ist zu jedem Sicherungselement der ersten Sicherungsanordnung bzw. zu jedem Anhängerstromkreis eine eigene Anzeige vorgesehen. In vorteilhafter Weiterbildung kann vorgesehen sein, dass das Störsignal monostabil geschaltet ist und nach Wegfall einer Störung bestehen bleibt, bis es durch den Benutzer gezielt zurückgesetzt wird oder durch Entfernen der elektrischen Leistungsversorgung, z. B. durch Lösen der Steckerverbindung, gelöscht wird. Durch die monostabile Schaltung des Störsignals kann dem Benutzer auch nach Wegfall der auslösenden Störung angezeigt werden, dass eine Störung vorgelegen hat und der Stromkreis vorsorglich überprüft werden sollte. Das Störsignal kann auch zum Zugfahrzeug übertragen werden, vorzugsweise über eine drahtlose Signalverbindung, und dort dem Fahrer optisch oder akustisch angezeigt werden.

Zusätzlich zu den Sicherungselementen der ersten Sicherungsanordnung können noch selbstrückstellende Sicherungselemente bei den einzelnen Leuchtenanordnungen vorgesehen sein, welche wiederum eine niedrigere Ansprechschwelle aufweisen können als das dem Anhängerstromkreis zugeordnete Sicherungselement in der ersten Sicherungsanordnung.

Die Erfindung ist nachfolgend anhand bevorzugter Ausführungsbeispiele unter Bezugnahme auf die Abbildungen noch eingehend veranschaulicht. Dabei zeigt:
- Fig. 1: schematische Stromkreisabschnitte einer Beleuchtungsanordnung einer Zugfahrzeug-Anhänger-Kombination,
- Fig. 2: eine alternative Ausführung eines anhängerseitigen Stromkreises,
- Fig. 3: eine Leuchtenanordnung in einem anhängerseitigen Stromkreis.

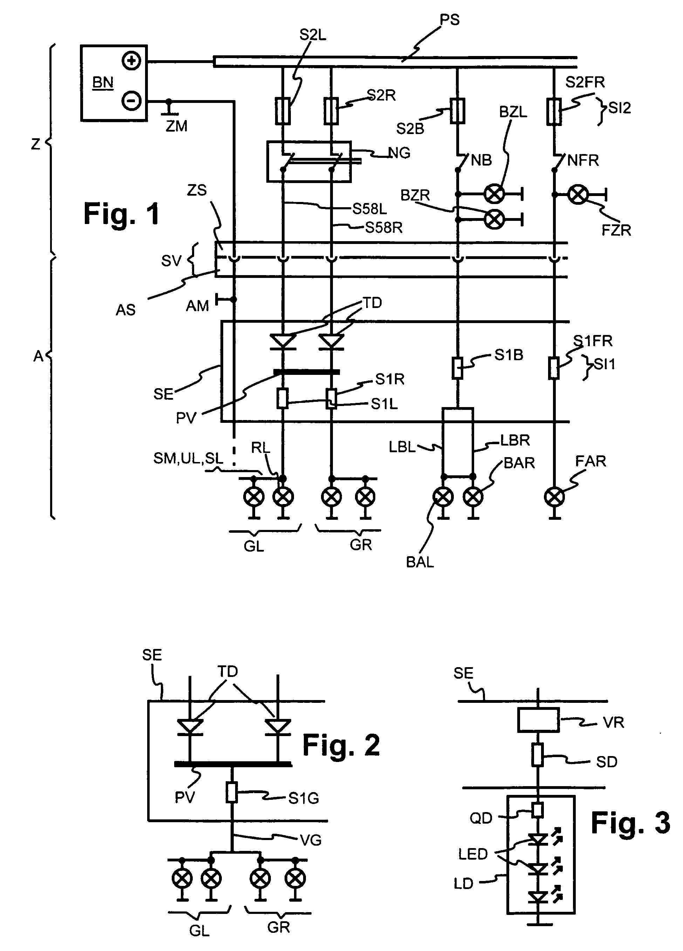

Fig. 1 zeigt in schematischer Darstellung auszugsweise Leitungsführungen mit zur weiteren Erläuterung der Erfindung zweckmäßigen Elementen einer Beleuchtungsanordnung einer Zugfahrzeug-Anhänger-Kombination. In der Zeichnung ist ein zugfahrzeugseitiger Abschnitt Z und ein anhängerseitiger Abschnitt A des schematischen Aufbaus der Beleuchtungsanordnung unterschieden. Die beiden Abschnitte sind über eine mehrpolige Steckerverbindung SV mit einem zugfahrzeugseitigen Steckerteil ZS und einem anhängerseitigen Steckerteil AS elektrisch verbunden.

Die Anordnung ist elektrisch versorgt aus dem Gleichstrom-Bordnetz BN des Zugfahrzeugs, dessen Minuspol typischerweise als Referenzpotential die elektrische Fahrzeugmasse bildet und dessen Pluspol in Fig. 1 mit einer Potentialverteilerschiene PS verbunden ist, von welcher aus die einzelnen Stromkreise abgehen. Die Zugfahrzeugmasse ZM ist allen Stromkreisen als Referenzpotential gemeinsam. Die elektrische Anhängermasse AM ist zum einen durch die Steckerverbindung SV hindurch mit der elektrischen Masse ZM des Zugfahrzeugs kontaktiert, darüber hinaus bestehen aber auch typischerweise über metallische mechanische Verbindungen zwischen Zugfahrzeug und Anhänger noch elektrische Masseverbindungen zwischen Zugfahrzeug und Anhänger.

Auf Anhängerseite werden innerhalb der Beleuchtungsanordnung des Anhängers typischerweise die Beleuchtungsfunktionen Bremslicht, Blinker links, Blinker rechts, Rückfahrscheinwerfer, Nebelschlussleuchte und Rücklichtgruppe als unabhängige Funktionen unterschieden, wobei in gegebenen Systemen die Rücklichtgruppe aufgeteilt ist in zwei unabhängige und separat abgesicherte Stromkreise mit einer linken Rücklichtgruppe GL und einer rechten Rücklichtgruppe GR, welche jeweils neben den eigentlichen Rücklichtern RL noch nach Fahrzeugseiten getrennt Umrissleuchten UL, Spurhalteleuchten SL und seitliche Markierungsleuchten SM umfassen. Eine Kennzeichenbeleuchtung kann einer der beiden Rücklichtgruppen oder bei Aufteilung in zwei Beleuchtungsteile beiden Rücklichtgruppen zugeordnet sein. Die beiden Rücklichtgruppen sind über Leitungen, welche typischerweise mit Klemmenbezeichnungen 58L und 58R unterschieden sind, separat versorgt und in einer zugfahrzeugseitigen zweiten Sicherungsanordnung SI2 auch mit separaten Sicherungen S2L bzw. S2R getrennt abgesichert. Beide Rücklichtgruppen werden aber simultan über einen Doppelschalter NG im Zugfahrzeug geschaltet. Über die Stromkreise mit den Klemmenbezeichnungen 58L und 58R werden lediglich die Rücklichtgruppen GL und GR der Anhängerbeleuchtung gespeist.

Im Unterschied dazu sind bei den übrigen genannten unabhängigen Beleuchtungsfunktionen jeweils nur ein Stromkreis mit einer Sicherung und einem Schalter vorgesehen und die Stromkreise speisen neben den jeweils betroffenen Leuchten der Anhänger-Beleuchtungsanordnung auch die funktional gleichen Leuchten des Zugfahrzeugs. Als Beispiele für solche weiteren Stromkreise sind ein Bremslicht-Stromkreis mit einer zugfahrzeugseitigen Sicherung S2B, zugfahrzeugseitigen beidseitigen Bremsleuchten BZL und BZR sowie anhängerseitigen beidseitigen Bremsleuchten BAL und BAR sowie ein Blinklicht-Stromkreis rechts mit einer eigenen Sicherung S2FR in der zugfahrzeugseitigen Sicherungsanordnung SI2, wenigstens einem rechten Blinklicht FZR am Zugfahrzeug und wenigstens einem rechten Blinklicht FAR am Anhänger in Fig. 1 mit eingezeichnet. Die übrigen Komponenten und Stromkreise der Beleuchtungsanordnung der Zugfahrzeug-Anhänger-Kombination sind der Übersichtlichkeit halber weg gelassen.

Es ist darüber hinaus bekannt, auf Anhängerseite in einer primär als Verteiler fungierenden frontseitigen Steuereinrichtung SE eine eigene Sicherungsanordnung SI1 vorzusehen. Die Ansprechstromschwellen der Sicherung in der ersten Sicherungsanordnung SI1 auf Anhängerseite können, insbesondere bei den Stromkreisen, welche sowohl anhängerseitige als auch zugfahrzeugseitige Leuchtenanordnungen versorgen, niedriger liegen als in der zweiten Sicherungsanordnung SI2 im Zugfahrzeug. Bei der erfindungsgemäßen Beleuchtungsanordnung sind die Sicherungen in der anhängerseitigen ersten Sicherungsanordnung SI1 vorteilhafterweise als selbstrückstellende Überstrom-Sicherungselemente ausgeführt.

In einer ersten vorteilhaften Ausführungsform können diese Sicherungselemente als Strombegrenzer wirken, welche bis zu einer je nach Stromkreis unterschiedlich vorgegebenen Ansprechstromschwelle niederohmig sind und ab der Ansprechstromschwelle den Strom durch das Sicherungselement auf einen Grenzstrom beschränken, welcher annähernd gleich dem Ansprechschwellstrom ist. Hierdurch wird der in den Anhängerstromkreisen fließende Strom im Kurzschlussfall auf den Grenzstrom des Sicherungselements begrenzt. Durch das im Kurzschlussfall hochohmige Sicherungselement fällt die Verlustleistung überwiegend in dem Kurzschlusselement selbst an, bei welchem für eine kontrollierte Abführung der Verlustwärme vorgesorgt werden kann, so dass auch im Kurzschlussfall keine unkontrollierte Hitzeentwicklung an irgend einer anderen Stelle im Stromkreis zu erwarten ist.

Das strombegrenzende Sicherungselement bleibt im Störungsfall, insbesondere auch im Kurzschlussfall zerstörungsfrei erhalten und begrenzt den Strom durch den betroffenen Stromkreis. Nach Wegfall der Störung geht das strombegrenzende Sicherungselement wieder in den niederohmigen Zustand über.

Der Einsatz eines zerstörungsfrei reagierenden, selbstrückstellenden Sicherungselements auf Anhängerseite trägt der Erkenntnis Rechnung, dass häufig Störungen im Lastfahrzeug-Anhängerbereich nur kurzfristig auftreten, beispielsweise bei Beschädigung einer der mehreren Leuchtenanordnungen durch Auffahren auf ein Hindernis, was häufig auch vom Fahrer nicht bemerkt wird, oder durch Salzwasser-Strombrücken usw., dass aber nach Wegfall solcher temporärer Überstrom-Situationen im Stromkreis durch den Einsatz des selbstrückstellenden Sicherungselement der Stromkreis, gegebenenfalls mit Ausnahme einer zerstörten oder teilzerstörten Leuchtenanordnung wieder funktioniert und damit gegenüber dem gebräuchlichen Einsatz von Schmelzsicherungen, bei welchen der betroffene Stromkreis bis zum Auswechseln der Schmelzsicherung dauerhaft unterbrochen ist, eine höhere Verkehrssicherheit erreicht wird.

In anderer vorteilhafter Ausführungsform sind die Sicherungselemente in der ersten Sicherungsanordnung SI1 auf Anhängerseite als PTC-Schaltsicherungen, insbesondere auf Polymerbasis (PPTC) ausgeführt, welche ab Erreichen einer Ansprechstromschwelle durch Erwärmung eines Polymers sprunghaft in einen sehr hochohmigen Zustand übergehen. Durch Abkühlen des Polymers, beispielsweise nach Wegfall eines temporären Kurzschlusses im Stromkreis oder nach Lösen der Steckerverbindung SV, gehen derartige PTC-Schaltsicherungen wieder in den niederohmigen Zustand über. Bei derartigen PTC-Schaltsicherungen ist der Strom im ausgelösten Zustand des Sicherungselements vorteilhafterweise sehr gering, da der Widerstand des Sicherungselements beim Auslösen in den Megaohmbereich springt. Es fällt damit für diesen Stromkreis im Störungsfall praktisch keine Verlustleistung an. Besonders vorteilhaft ist die Kombination solcher PTC-Schaltsicherungen mit der Verwendung von Reihenschaltungen von Leuchtdioden als Leuchtmitteln in den angeschlossenen anhängerseitigen Leuchtenanordnungen. Der beim Abkühlen des ausgelösten Sicherungselements nach Wegfall beispielsweise eines Kurzschlusses allmählich wieder einsetzende Strom durch das Sicherungselement führt bereits bei sehr geringen Stromstärken in der Leuchtenanordnung zu einem relativ hohen Spannungsabfall entsprechend der Summe der Durchlassspannungen der Leuchtdioden-Reihenschaltung, so dass am Sicherungselement selbst nur noch ein geringer Spannungsabfall und damit auch nur noch eine geringe Verlustleistung anfällt und die Abkühlung des Sicherungselements schnell erfolgen kann.

Bei den in Fig. 1 dargestellten Stromkreisen der Zugfahrzeug-Anhänger-Kombination ist der Stromkreis für den rechten Blinker am einfachsten aufgebaut dargestellt mit einer zugfahrzeugseitigen Schmelzsicherung S2FR in der zweiten Sicherungsanordnung SI2, einem Blinkerschalter NFR, einer zugfahrzeugseitigen Blinkleuchte FZR, einer anhängerseitigen selbstrückstellenden Sicherung S1 FR in der ersten Sicherungsanordnung SI1 und einer anhängerseitigen rechten Bremsleuchte FAR.

Bei dem in Fig. 1 gleichfalls dargestellten Bremslichtschaltkreis mit zugfahrzeugseitiger Schmelzsicherung S2B, Bremslichtschalter NB und anhängerseitiger selbstrückstellender Sicherung S1B sind auf Zugfahrzeugseite rechts- und linksseitige Bremsleuchten BZR und BZL und auf Anhängerseite rechtsseitige und linksseitige Bremsleuchten BAR bzw. BAL vorgesehen. Auf Anhängerseite ist nach der Sicherung S1 B insoweit eine Besonderheit der Leitungsführung zu den seitlichen Bremsleuchten vorgesehen, als zwei separate Längsleitungen LBL und LBR vorgesehen sind, welche vor den Bremsleuchten wieder untereinander querverbunden sind. Durch die Querverbindung wird eine geschlossene Leiterschleife gebildet, so dass bei Durchtrennung einer der beiden Längsleitungen, beispielsweise durch einen Unfall, dennoch beide Bremsleuchten BAL und BAR funktionsfähig sind, was zu höherer Verkehrssicherheit führt. Eine besondere Beschaltung der auf Zugfahrzeugseite getrennten und auch getrennt abgesicherten Leitungen zu den Rücklichtgruppen GL und GR sieht gemäß der Erfindung vor, dass die vom Zugfahrzeug getrennt zu der Steckerverbindung SV geführten Leitungen 58L und 58R auf Anhängerseite nach der Steckerverbindung auf ein gemeinsames Potential, repräsentiert durch den Verbinder PV in Fig. 1, zusammengeführt werden und die beiden Rücklichtgruppen GL und GR aus diesem gemeinsamen Potential gespeist werden. Durch die immer gemeinsame Schaltung der beiden Stromkreise durch die Lichtschaltergruppe NG, welche typischerweise mit weiteren Kontakten gleichzeitig auch die Beleuchtung des Zugfahrzeugs schaltet, ergibt sich im Regelfall keine funktionale Änderung für den Betrieb der Rücklichtgruppen GL und GR. Ein wesentlicher Vorteil der Potentialzusammenführung besteht aber darin, dass bei einer Störung im zugfahrzeugseitigen Teil der Leitungsführung, beispielsweise Ansprechen einer der Schmelzsicherungen S2L oder S2R oder durch Widerstandsanstieg in einer der Zuleitungen durch Querschnittsverringerung an bewegten Knickstellen, durch Kontaktprobleme usw. die Leistungsversorgung beider Rücklichtgruppen problemlos durch die andere intakte Zuleitung auf Zugfahrzeugseite mit übernommen werden kann. Die erfindungsgemäße Potentialzusammenführung ist besonders vorteilhaft in Verbindung mit der Verwendung von Leuchtdioden als Leuchtmitteln in den Rücklichtgruppen GL und GR, da dadurch der Betriebsstrom der Rücklichtgruppen für gleiche Lichtleistung gegenüber der Verwendung von Glühlampen in herkömmlichen Leuchten deutlich verringert werden kann und auch der kumulierte Betriebsstrom durch beide Rücklichtgruppen problemlos von nur einer der zugfahrzeugseitigen Zuleitungen und Sicherungen getragen werden kann. Vorteilhafterweise sind vor der Potentialzusammenführung in dem Verbinder PV Rückstromsperren in beide Leitungswege 58L, 58R auf Anhängerseite eingefügt, so dass bei Auftrennung eines Leitungsweges auf der Zugfahrzeugseite sicher gestellt wird, dass keine Spannungsrückführung über den anderen Leitungsweg und über die Potentialzusammenführung in den abgetrennten Teil des unterbrochenen Leitungswegs erfolgen kann. Die Rückstromsperren können vorteilhafterweise als Halbleiterdioden TD ausgeführt sein. Die ungestörte Fortsetzung des Betriebs beider Rücklichtgruppen auch bei Störung in einem der zugfahrzeugseitigen Leitungswege 58L oder 58R trägt auf besonders einfache Weise erheblich zur Erhöhung der Verkehrssicherheit durch geringere Ausfallwahrscheinlichkeit von Teilen der Beleuchtungsanordnung des Anhängers bei. Vorteilhafterweise ist dabei keinerlei Eingriff in das Leitungssystem der Nutzfahrzeuge erforderlich, so dass die neue anhängerseitige Anordnung problemlos mit allen standardisierten Nutzfahrzeugen betrieben werden kann.

Im skizzierten Beispiel der Fig. 1 führen nach der Potentialzusammenführung im Verbinder PV von dem einheitlichen Potential getrennte Leitungen über separate selbstrückstellende Sicherungen S1 L bzw. S1R der ersten Sicherungsanordnung SI1 zu den Rücklichtgruppen GL und GR, welche jeweils eine Mehrzahl einzelner Leuchten in separaten Gehäusen umfassen.

In Fig. 2 ist eine Variante für die anhängerseitigen Stromkreise der Rücklichtgruppen GL und GR skizziert. In dieser Variante führt nach der Potentialzusammenführung in dem Verbinder PV lediglich eine Verbindungsleitung VG über ein einzelnes Sicherungselement S1G in der ersten Sicherungsanordnung zum Fahrzeugheck und verzweigt sich dort auf die einzelnen Leuchten der beiden Rücklichtgruppen GL und GR.

In Fig. 3 ist schematisch ein Leuchtenaufbau einer Leuchte LD mit einer Reihenschaltung von mehreren Leuchtdioden LED skizziert. Der Reihenschaltung der Leuchtdioden ist im oder beim Gehäuse der Leuchtenanordnung LD vorteilhafterweise ein Element QD zur Einstellung des Betriebsstroms der in Reihe geschalteten Leuchtdioden vorgesehen. Das Element QD kann im einfachsten Fall ein Vorwiderstand sein. In anderer Ausführung kann das Element QD auch eine Stromquelle sein, welche zugleich als Strombegrenzer bei variierenden Spannungen am Eingang der Leuchtenanordnung dient. In der Steuereinrichtung SE ist für den Stromkreis als weitere Maßnahme der Einsatz eines Spannungsreglers VR vorgesehen, welcher vorteilhafterweise vor dem selbstrückstellenden Sicherungselement SD der ersten Sicherungsanordnung SI1 angeordnet ist. Mittels des Spannungsreglers VR kann die Spannung für den Leuchtenstromkreis beispielsweise auf ca. 12 V gegenüber den für Bordnetzen von Zugmaschinen typischen Wert von 24 V herabgesetzt werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Anhänger-Beleuchtungsanordnung für eine Zugfahrzeug-Anhänger-Kombination mit wenigstens einer anhängerseitigen Verbraucheranordnung,
- welche über eine erste Sicherungsanordnung an einen anhängerseitigen Teil einer Steckerverbindung angeschlossen ist und
- welche aus einer zugfahrzeugseitigen elektrischen Energiequelle über eine fahrzeugseitige Leitungsanordnung mit einer zweiten Sicherungsanordnung und einen zugfahrzeugseitigen Teil einer Steckverbindung gespeist ist, wobei
a) - die der einen Verbraucheranordnung zugeordnete Leitungsanordnung bis zu der Steckerverbindung zwei getrennte parallele Leitungswege mit je einer eigenen Sicherung (S1 L, S1 R) in der zweiten Sicherungsanordnung (SI2) aufweist,
- die beiden Leitungswege (58R, 58L) nach der Steckerverbindung und vor der ersten Sicherungsanordnung auf ein gemeinsames elektri sches Potential zusammengeführt sind,
- in den beiden Leitungszweigen vor der Potentialzusammenführung (PV) je eine Rückstromsperre (TD) eingefügt ist
und/oder
b) ein einer Verbraucheranordnung zugeordnetes Sicherungselement in einer ersten Sicherungsanordnung (SI1) ein selbstrückstellendes Bauteil mit PTC-Charakteristik ist und eine Ansprechstromschwelle aufweist, niedriger liegt als eine Schaltstromquelle eines zugeordneten Sicherungselements einer zweiten Sicherungsanordnung im Zugfahrzeug ist.

2. Anordnung nach Anspruch 1, **dadurch gekennzeichnet, dass** die Verbraucheranordnung wenigstens eine Leuchtdioden (LED)-Anordnung enthält.

3. Anordnung nach Anspruch 2, **dadurch gekennzeichnet, dass** die Verbraucheranordnung eine Reihenschaltung mehrerer Leuchtdioden enthält.

4. Anordnung nach Anspruch 2, **dadurch gekennzeichnet, dass** die Verbraucheranordnung mehrere elektrische parallel geschaltete LED-Anordnungen (RL, SM, SL, UL) enthält.

5. Anordnung nach einem der Ansprüche 1 bis 5, **dadurch gekennzeichnet, dass** die Rückstromsperren Halbleiterdioden (TD) sind.

6. Anordnung nach einem der Ansprüche 1 bis 5, **dadurch gekennzeichnet, dass** die über die beiden getrennten parallelen Leitungswege (58L, 58R) und das gemeinsame Zwischenpotential (PV) versorgte Verbraucheranordnung beidseitige Leuchtengruppen (GL, GR) mit Rücklichtern (RL) und mit diesen gemeinsam betriebene Leuchten (SM, UL, SL) umfasst.

7. Anordnung nach Anspruch 6, **dadurch gekennzeichnet, dass** die Steuereinrichtung (SE) am Anhänger frontseitig angeordnet ist und zumindest über den überwiegenden Längsverlauf des Anhängers ein gemeinsamer Leiter (VG) zur Versorgung der linksseitigen und der rechtsseitigen Leuchtengruppe (GL, GR) vorgesehen ist.

8. Anordnung nach einem der Ansprüche 1 bis 7, **dadurch gekennzeichnet, dass** ein Ansprechen des selbstrückstellenden Sicherungselements ein Störungssignal auslöst.

9. Anordnung nach Anspruch 8, **dadurch gekennzeichnet, dass** das Störungssignal drahtlos zum Zugfahrzeug übertragbar ist.

10. Anordnung nach Anspruch 8, **dadurch gekennzeichnet, dass** das Störungssignal ein optisches Signal auf Anhängerseite ist.

11. Anordnung nach Anspruch 8, **dadurch gekennzeichnet, dass** das Störungssignal auch nach Selbstrückstellen des Sicherungselements durch Wegfall des Überstroms bestehen bleibt und durch den Benutzer rücksetzbar ist.

12. Anordnung nach einem der Ansprüche 1 bis 11, **dadurch gekennzeichnet, dass** das selbstrückstellende Sicherungselement ein Strombegrenzungselement ist.

13. Anordnung nach einem der Ansprüche 1 bis 11, **dadurch gekennzeichnet, dass** das selbstrückstellende Sicherungselement ein PTC-Sicherungselement, insbesondere ein Polymer-PTC-Sicherungselement ist.
